# EUROPÄISCHE PATENTSCHRIFT

(11) **EP 4 263 316 B1**
(45) Veröffentlichungstag und Bekanntmachung des Hinweises auf die Patenterteilung: **29.01.2025**
(21) Anmeldenummer: 21839481.5
(22) Anmeldetag: 15.12.2021
(51) Int. Cl.: B61F 5/30, B61F 5/52

(54) **ANORDNUNG AUS EINEM KINEMATIKPAKET UND EINEM FEDERHEBEL FÜR EIN DREHGESTELL**
ARRANGEMENT OF A KINEMATICS ASSEMBLY AND A SPRING LEVER FOR A BOGIE
DISPOSITIF CONSTITUÉ D'UN ENSEMBLE CINÉMATIQUE ET D'UN LEVIER À RESSORT POUR UN BOGIE

(30) Priorität: 16.12.2020 DE 102020133694
(43) Veröffentlichungstag der Anmeldung: 25.10.2023
(73) Patentinhaber: CRRC QINGDAO SIFANG CO., LTD., Chengyang District Qingdao Shandong 266111 (CN); CG Rail - Chinesisch-Deutsches Forschungs- und Entwicklungszentrum für Bahn- und Verkehrstechnik Dresden GmbH, 01067 Dresden (DE)
(72) Erfinder: DING, Sansan, Qingdao, Shandong 266111 (CN); WANG, Xiaoming, Qingdao, Shandong 266111 (CN); LIN, Haobo, Qingdao, Shandong 266111 (CN); XIE, Jinlu, Qingdao, Shandong 266111 (CN); XIAO, Peng, Qingdao, Shandong 266111 (CN); WANG, Song, Qingdao, Shandong 266111 (CN); SUN, Houli, Qingdao, Shandong 266111 (CN); SONG, Zhengyu, Qingdao, Shandong 266111 (CN); ULBRICHT, Andreas, 01067 Dresden (DE); HUFENBACH, Werner, 01067 Dresden (DE); ZEIDLER, Florian, 01067 Dresden (DE); HAUSCHILD, Jonas, 01067 Dresden (DE); HALATA, Maik, 01067 Dresden (DE); MARTIN, Bert, 01067 Dresden (DE); ILLGNER, Jens, 01067 Dresden (DE); SOLTYSIAK, Stefan, 01067 Dresden (DE); IRMSCHER, Patrick, 01067 Dresden (DE)
(74) Vertreter: Winter, Brandl - Partnerschaft mbB
(86) Internationale Anmeldenummer: PCT/EP2021/085927
(87) Internationale Veröffentlichungsnummer: WO 2022/129191

(56) Entgegenhaltungen:
- CN-A- 110 588 699
- DE-A1- 102016 123 784
- DE-C- 735 080

## Beschreibung

Die Erfindung betrifft eine Anordnung aus einem Kinematikpaket und einem Federhebel für ein Drehgestell nach dem Oberbegriff des Anspruchs 1 sowie ein Drehgestell, aufweisend die Anordnung aus einem Kinematikpaket und einem Federhebel nach dem Oberbegriff des Anspruchs 9.

Konventionelle Drehgestelle für Schienenfahrzeuge in Stahlbauweise, bei denen die Primärfederung, also die Federung der Räder bzw. Radachsen gegenüber dem Drehgestell, zumeist durch Blattfedern, Schraubenfedern oder Gummi-Metall-Federn aufgebracht wird, weisen neben dem hohen Eigengewicht zusätzliche Nachteile dadurch auf, dass sie aus vielen Einzelteilen bestehen und wenig Bauraum für Einbauten, wie Antriebe, Steuergeräte und Bremsen vorhanden ist.

Um das Eigengewicht zu verringern, sind aus dem Stand der Technik Drehgestelle in Faser-Kunststoff-Verbundbauweise bekannt, bei denen die Primärfederung durch den Drehgestellrahmen, wie z. B. in der DE 29 52 182 A1 beschrieben, oder durch Blattfedern aus einem Faser-Kunststoff-Verbundmaterial (FKV) realisiert wird, wie z. B. aus der US 2012/0 279 416 A1 bekannt.

Besondere Vorteile bietet die Verwendung von FKV bei der Gestaltung von auch als Drehstabfedern, Drehstäben oder Torsionsstäben bezeichneten Torsionsfedern aufgrund der Möglichkeit zur belastungsgerechten Faserorientierung, was dazu führt, dass in die Torsionssteifigkeit einer Torsionsfeder aus FKV das Elastizitäts-Modul E in Längsrichtung der Fasern eingeht und nicht, wie beispielsweise bei metallischen Federn, das im Allgemeinen kleinere Schubmodul G.

Unter anderem aus diesem Grund weisen Drehgestelle, bei denen die Primärfederung mittels Torsionsfedern realisiert wird, hohes Leichtbaupotenzial und ausreichend Bauraum für Einbauten auf. Ein Drehgestell mit Torsionsfeder-Primärfederung, bei dem die Radachsen durch in Höhenrichtung schwingende Lenker am Drehgestellrahmen befestigt sind, wobei jeder Lenker an dem Endbereich einer quer zur Fahrtrichtung angeordneten Torsionsfeder befestigt ist, ist beispielsweise aus der DE 735 080 A bekannt. Eine ähnliche Bauform ist in der DE 838 897 B beschrieben, wobei die Lenker hier über eine einstellbare Verankerung der Torsionsfedern in der Drehgestellmitte höhenverstellbar sind.

Die DE 699 17 159 T2 offenbart ein Drehgestell, welches zur gemeinsamen Abstützung auf Rädern angepasst ist, und welches mindestens zwei Radachsen, mindestens einen von den Achsen zu einem wenigstens annähernd auf der mittleren Länge des Drehgestells liegenden Abschnitt verlaufenden Längsträger und Achskästen umfasst, in welchem die Achsen drehbar montiert sind, und wobei der Längsträger mindestens einen elastischen Stab umfasst, der eine primäre Aufhängung bildet, und aus einem Verbundwerkstoff auf der Grundlage von Fasern besteht, die in einem Harz eingebettet sind.

Weiterhin offenbart die EP 2 733 041 A1 ein Drehgestell (für ein Schienenfahrzeug, aufweisend einen Querträger, der dazu ausgebildet ist, einen Wagenkörper eines Schienenfahrzeugs zu tragen, ein Paar Vorder- und Hinterachsen, die jeweils auf beiden Seiten des Querträgers in einer Längsrichtung des Schienenfahrzeugs angeordnet sind, um sich in einer Breitenrichtung des Schienenfahrzeugs zu erstrecken, Lager, die jeweils auf beiden in Breitenrichtung des Schienenfahrzeugs liegenden Seiten jeder der Achsen vorgesehen und dazu ausgebildet sind, die Achsen drehbar zu tragen, Achsgehäuse, die dazu ausgebildet sind, jeweils die Lager aufzunehmen, Tellerfedern, die sich in der Längsrichtung des Schienenfahrzeugs erstrecken, und Kontaktelemente, die jeweils an beiden in Breitenrichtung des Schienenfahrzeugs liegenden Endabschnitten des Querträgers vorgesehen sind, die jeweils trennbar an in Längsrichtung des Schienenfahrzeugs liegenden Mittelabschnitten der Tellerfedern angeordnet sind, um nicht in einer vertikalen Richtung an den Tellerfedern befestigt zu sein, und Tragelemente, die jeweils an den Achsgehäusen vorgesehen sind und jeweils die in Längsrichtung des Schienenfahrzeugs liegenden Endabschnitte der Tellerfedern tragen, wobei eine obere Fläche des in Längsrichtung des Schienenfahrzeugs liegenden Mittelabschnitts jeder der Tellerfedern eine im Wesertlichen kreisbogenförmige Form aufweist, die in einer Seitenansicht nach unten konvex ist.

Das in der DE 10 2016 123 784 A1 gezeigte Drehgestell mit Torsionsfeder-Primärfederung weist je einen geschwungenen Federhebel pro Achslager eines Radsatzes auf, der jeweils mit einem Endbereich einer Torsionsfeder des Drehgestells verbunden ist und von oben auf das Achslager wirkt. Der gezeigte Federhebel ist ein massives Stahlbauteil. Die Anbindung an das Achslager erfolgt über einen flachen Teller am achslagerseitigen Endbereich des Federhebels. Ein Achslager eines Radsatzes ist jeweils über einen Achshebel mit dem Drehgestellrahmen, z. B. einem Querträger, gelenkig verbunden. Dabei weisen das Achslager mit dem Achshebel und die Torsionsfeder mit dem Federhebel im Drehgestell unterschiedliche Drehpunkte auf, wodurch sich beim Federn eine Relativbewegung zwischen den Komponenten ergibt.

Es ist bekannt, diese Relativbewegung mit einem Dämpfungselement auszugleichen, wobei bei der in der DE 10 2016 123 784 A1 gezeigten Bauform ein etwa 50 mm hohes Gummi-Metall-Element eingesetzt werden kann. Dabei ist für gute Dämpfungseigenschaften die Verwendung eines eher harten Gummi-Metall-Elements angezeigt, während für einen guten Ausgleich der Relativbewegung ein eher weiches Gummi-Metall-Element vorteilhaft ist. Eine schlechte Dämpfung kann sich nachteilig auf den Fahrkomfort auswirken; ein mangelhafter Ausgleich der Relativbewegung kann den Verschleiß der beteiligten Komponenten beschleunigen.

Aufgabe der Erfindung ist es daher, die Nachteile des Stands der Technik zu überwinden und eine Anordnung für ein Drehgestell zu schaffen, mit der sowohl gute Dämpfungseigenschaften erzielt werden können, als auch der Verschleiß von Komponenten des Drehgestells verlangsamt werden kann.

Die Aufgabe wird gelöst durch eine Anordnung mit den Merkmalen des Anspruchs 1 und ein Drehgestell mit den Merkmalen des Anspruchs 9. Weiterbildungen der Erfindung sind in untergeordneten Ansprüchen angegeben.

Die erfindungsgemäße Anordnung aus einem Kinematikpaket und einem Federhebel ist geeignet für ein Drehgestell, aufweisend mindestens zwei Radsätze mit jeweils zwei durch eine Achse verbundenen Rädern, wobei jeder Endbereich einer Achse in einem Achslager gelagert ist. Die Achslager sind beispielsweise über Achshebel gelenkig mit dem Drehgestellrahmen verbunden.

Der Federhebel der Anordnung weist einen ersten Endbereich auf, der mit einer Federkomponente der Primärfederung des Drehgestells verbindbar ist, und einen zweiten Endbereich, der zur Wirkung auf das ihm zugeordnete Achslager eines der Radsätze des Drehgestells mittels des Kinematikpakets ausgebildet ist

Die Anordnung dient dazu, die Kräfte und Bewegungen eines Radsatzes gegenüber dem Drehgestell auf die Primärfederung zu übertragen und/oder aufzunehmen und/oder auszugleichen. Vorzugsweise ist der zweite Endbereich des Federhebels so angeordnet, dass der Federhebel von oben auf das zugeordnete Achslager wirkt, wobei die Positionsbezeichnungen "oben" und "unten" in Bezug auf die Positionierung der Anordnung im Drehgestell zu verstehen sind, "unten" also eine bodennähere Positionierung impliziert.

Erfindungsgemäß weist das Kinematikpaket mindestens ein Dämpfungselement, mindestens einen Reibbelag und mindestens ein Gelenklager auf.

Vorteilhaft kann durch die erfindungsgemäße Ausführung des Kinematikpakets der erfindungsgemäßen Anordnung das Dämpfungselement gezielt zur Erfüllung der Dämpfungsanforderungen eingerichtet sein, da das z. B. als Schwenklager ausgeführte Gelenklager den Winkelversatz und der Reibbelag den translatorischen Versatz zwischen den Komponenten ausgleicht.

Da das erfindungsgemäße Kinematikpaket mehr Bauraum als konventionelle Lösungen benötigt, ist der Federhebel erfindungsgemäß als Hohlkammerprofil mit mindestens einer Hohlkammer ausgebildet, wobei das Kinematikpaket zumindest bereichsweise im inneren Volumen der mindestens einen Hohlkammer angeordnet ist, d. h. in das innere Volumen des Federhebels hineinragt. Dazu weist eine erste der äußeren Wandungen des Federhebels eine Aussparung auf, durch die das Kinematikpaket in das innere Volumen des Federhebels hineinragt während die der ersten gegenüberliegende, zweite Wandung mit dem Kinematikpaket verbunden ist.

Vorzugsweise ist der Federhebel ein Hohlkammerprofil mit genau einer Hohlkammer. In der bevorzugten Positionierung des Kinematikpakets oberhalb des Achslagers weist die untere also die dem Achslager zugewandte, Wandung des Hohlkammerprofils eine Aussparung zur Aufnahme des Kinematikpakets auf. Eine Befestigung des Kinematikpakets kann dann an der oberen Wandung des Hohlkammerprofils erfolgen.

Vorzugsweise ist das Dämpfungselement des Kinematikpakets achslagerseitig angeordnet, also an der, dem Achslager zugewandten Seite des Kinematikpakets, und das Gelenklager federhebelseitig, also an der der Federhebelwandung, die keine Aussparung zur Aufnahme des Kinematikpakets aufweist, zugewandten Seite des Knematikpakets. Vorzugsweise ist das Dämpfungselement unterhalb des Gelenklagers angeordnet. Der Reibbelag ist zwischen dem Dämpfungselement und dem Gelenklager angeordnet.

Der Reibbelag kann beispielsweise ein Reibbelag auf PTFE-Basis sein.

In einer Ausführungsform der Anordnung ist der Federhebel als ein Hohlkammerprofil aus einem FKV ausgebildet. Der FKV-Federhebel kann so ausgebildet sein, dass seine untere Wandung eine Aussparung aufweist, durch die das Kinematikpaket in das innere Volumen des FKV-Federhebels hineinragt. Das Kinematikpaket liegt an der, dem inneren Volumen zugewandten Seite der oberen Wandung des FKV-Federhebels an. Die mittels des Kinematikpakets übertragenen Kräfte werden also an bzw. von der oberen Wandung des FKV-Federhebels aufgenommen bzw. übertragen. Gegenüber einem konventionellen Stahlprofil kann durch die Ausführung des Federhebels in Faserverbundbauweise eine erhebliche Gewichtsreduktion bei gleichen mechanischen Eigenschaften erzielt werden. Als Verstärkungsfasern können bevorzugt Kohlenstofffasern zum Einsatz kommen.

In einer weiteren Ausführungsform der Anordnung ist der erste Endbereich des Federhebels drehfest mit einem Endbereich eines Torsionsfederelements als Federkomponente der Primärfederung eines Drehgestells verbindbar. Die erfindungsgemäße Anordnung ist demnach besonders geeignet für ein Drehgestell mit Torsionsfeder-Primärfederung.

In einer weiteren Ausführungsform der erfindungsgemäßen Anordnung weist das Kinematikpaket eine gegenüber der Umgebung abgedichtete Einhausung auf. Beispielsweise kann die Einhausung achslagerseitig mit einer O-Ring-Dichtung abgedichtet sein. Federhebelseitig kann die Einhausung eine von ihrer Mantelfläche trennbare Abdeckung aufweisen. Vorteilhaft bietet die Einhausung Schutz vor verschleißfördernden äußeren Einflüssen.

In einer weiteren Ausführungsform der erfindungsgemäßen Anordnung ist das Kinematikpaket lösbar mit dem Federhebel verbunden und lösbar mit dem Achslager verbindbar. Vorteilhaft kann das Kinematikpaket z. B. zu Wartungszwecken von der Anordnung demontiert werden. Beispielsweise kann das Kinematikpaket mit dem Federhebel verschraubt sein, z. B. über eine Hülsenkupplung mit Passfeder, die in das Kinematikpaket eingreift.

In einer weiteren Ausführungsform der erfindungsgemäßen Anordnung weist das Kinematikpaket eine zwischen dem Gelenklager und dem Federhebel angeordnete und in das Gelenklager eingreifende Abhebesicherung auf. Beispielsweise kann in dieser Ausführung zur lösbaren Verbindung des Kinematikpakets mit dem Federhebel eine Hülsenkupplung mit Passfeder in die Abhebesicherung eingreifen.

Achslagerseitig ist das Kinematikpaket bevorzugt so ausgeführt, dass zu seiner Lagesicherung ein Formschluss zum Achslager vorgesehen ist, z. B. über eine Aufnahme für ein Führungselement, z. B. einen Zapfen, des Achslagers, das zum Eingriff in das Kinematikpaket ausgebildet ist.

In einer weiteren Ausführungsform weist das Kinematikpaket der erfindungsgemäßen Anordnung mindestens eine Ausgleichsscheibe auf. Die Ausgleichsscheibe ist bevorzugt dem Dämpfungselement zugeordnet und an diesem angeordnet, besonders bevorzugt achslagerseitig. Die Ausgleichsscheiben dienen im Wesentlichen zum Toleranzausgleich und zur Niveauregulierung zwischen den einzelnen Federhebeln des Drehgestells, so dass vorzugsweise jeder Federhebel des Drehgestells gleich stark belastet ist.

In einer weiteren Ausführungsform der erfindungsgemäßen Anordnung ist das Dämpfungselement des Kinematikpakets ein Gummi-Metall-Element. Die spezifischen Dämpfungseigenschaften des Gummi-Metall-Elements können beispielsweise über die Auswahl der Gummmischung und die Formgebung des Elements definiert werden.

Ein weiterer Aspekt der Erfindung betrifft ein Drehgestell fürein Schienenfahrzeug mit mindestens zwei in Achslagern gelagerten Radsätzen und wenigstens einem Querträger, wobei jedes der zwei Achslager eines Radsatzes über einen Achshebel mit dem Querträger gelenkig verbunden ist. Das Drehgestell weist als Primärfederung mindestens zwei parallel zu den Achsen der Radsätze angeordnete Torsionsfederelemente auf, die ihrerseits jeweils mindestens einen Bereich aufweisen, in dem sie mit dem Querträger drehfest verbunden sind Dabei ist jeweils einem Torsionsfederelement einer der Radsätze zugeordnet. Jedem Achslager des Drehgestells ist eine erfindungsgemäße Anordnung aus einem Kinematikpaket und einem Federhebel in einer oder einer Kombination der beschriebenen Ausführungsformen zugeordnet, wobei mit dem den Querträger überragenden Endbereich eines Torsionsfederelements ein erster Endbereich des Federhebels der erfindungsgemäßen Anordnung drehfest verbunden ist, und der nicht mit dem Torsionsfederelement verbundene, zweite Endbereich des Federhebels mittels des Kinematikpakets auf das Achslager wirkt. Zweckmäßig ist das Kinematikpaket dabei oberhalb des Achslagers angeordnet.

Die erfindungsgemäße Ausführung des Drehgestells erlaubt es vorteilhaft, besonders viele Komponenten des Drehgestells gewichtsparend aus einem FKV auszuführen, insbesondere den Querträger, die Primärfederung in Form der Torsionsfederelemente und den Federhebel der Anordnung.

In einer Ausführungsform weist ein Achslager des erfindungsmäßen Drehgestells mindestens ein Führungselement, z. B. einen Zapfen, auf, das zur Lagesicherung formschlüssig in das Kinematikpaket eingreift.

Im Rahmen dieser Beschreibung wird im Sinne der Kürze der Begriff "mindestens ein(e)" verwendet, welcher bedeuten kann: eins, genau eins, mehrere (z. B. genau zwei, oder mehr als zwei), viele (z. B. genau drei oder mehr als drei), etc. Dabei muss "mehrere" oder "viele" nicht unbedingt bedeuten, dass es mehrere oder viele identische Elemente gibt, sondern mehrere oder viele im Wesentlichen funktional gleiche Elemente.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Die Erfindung wird im Folgenden durch Ausführungsbeispiele anhand von Figuren erläutert, ohne auf diese beschränkt zu sein.

Dabei zeigt die
Fig. 1 eine schematische Darstellung eines erfindungsgemäßen Drehgestells in der Kavaliersperspektive;
Fig. 2 eine schematische Darstellung des erfindungsgemäßen Drehgestells der Fig. 1 in der Draufsicht mit Detail D;
Fig. 3 eine schematische Darstellung des in Fig. 2 angegebenen Details D des erfindungsgemäßen Drehgestells;
Fig. 4 eine schematische Darstellung des erfindungsgemäßen Drehgestells aus Fig. 1 in der Seitenansicht mit Detail A;
Fig. 5 die erfindungsgemäße Anordnung in einer schematischen Darstellung des Querschnitts des in Fig. 4 angegebenen Details A;
Fig. 6 die erfindungsgemäße Anordnung im Querschnitt des Details C aus der Fig. 5.

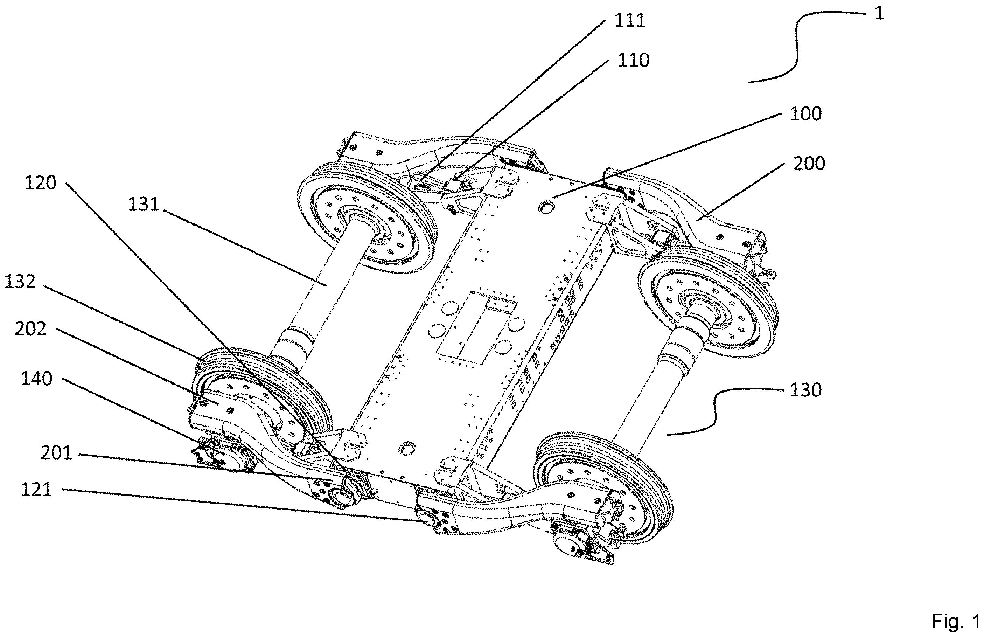

Die Fig. 1 zeigt ein erfindungsgemäßes Drehgestell 1 für ein Schienenfahrzeug in der Kavaliersperspektive. Als zentrale Anbindung für weitere Komponenten, z. B. Getriebe, Motoren, Bremsen, den Wagenkasten, etc., weist das Drehgestell 1 einen Querträger 100 auf. Am Querträger 100 sind vier Achshebelgelenke 110 mit entsprechenden Aufnahmen angeordnet. Jedes der Achshebelgelenke 110 verbindet einen Achshebel 111, der mit einem Achslager 140 verbunden ist, gelenkig mit dem Querträger 100. Je zwei Achslager 140 tragen einen Radsatz 130, wobei jeder Radsatz 130 zwei durch eine Achse 131 miteinander verbundene Räder 132 aufweist. Zur Primärfederung des Schienenfahrzeugs sind im inneren Volumen des Querträgers 100 zwei Torsionsfederelemente 121 parallel zu den Achsen 131 der Radsätze 130 angeordnet und in einem Bereich (verdeckt) etwa in der Achsenmitte jedes Torsionsfederelements 121 drehfest mit dem Querträger 100 verbunden. An den den Querträger 100 überragenden Endbereichen des Torsionsfederelements 121 ist jeweils eine Torsionsfederaufnahme 120 angeordnet, die das Torsionsfederelement 121 drehfest aufnimmt. Ein Torsionsfederelement 121 kann beispielsweise eine Torsionsfeder aufweisen. Ein Torsionsfederelement 121 kann beispielsweise aber auch zwei axial fluchtend angeordnete Torsionsfedern aufweisen, deren im inneren Volumen des Querträgers 100 angeordnete Endbereiche, die von den den Querträger 100 überragenden Endbereichen verschieden sind, mit dem Querträger 100 drehfest verbunden sind. Mit jeder Torsionsfederaufnahme 120 ist ein erster Endbereich 201 eines im Wesentlichen quer zur Radachse 131 ausgerichteten Federhebels 200 verbunden. Der zweite Endbereich 202 des Federhebels 200 wirkt über ein Kinematikpaket (verdeckt) von oben auf das zugeordnete Achslager 140.

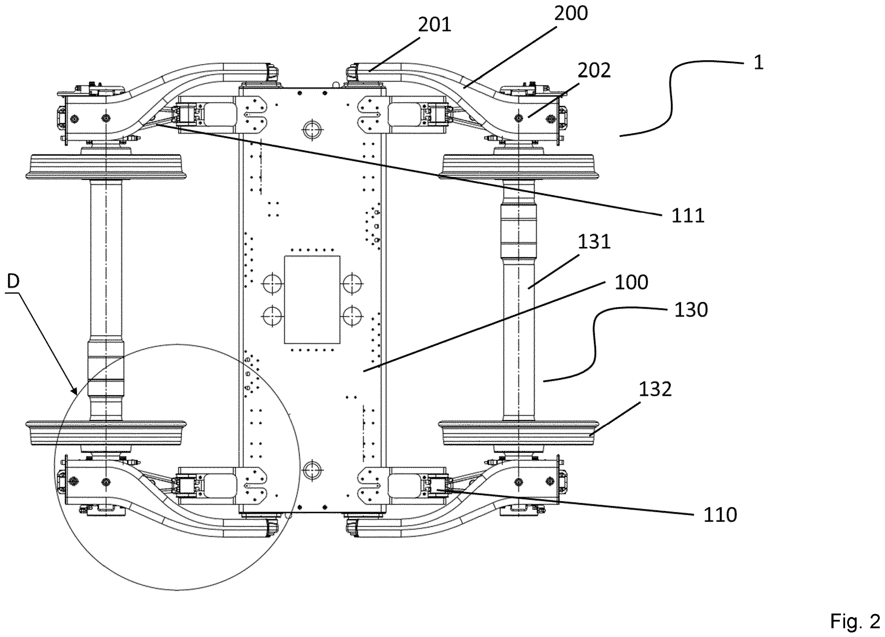

Die Fig. 2 zeigt das erfindungsgemäße Drehgestell 1 aus Fig. 1 in der Draufsicht. Das angegebene Detail D wird im Folgenden näher erläutert.

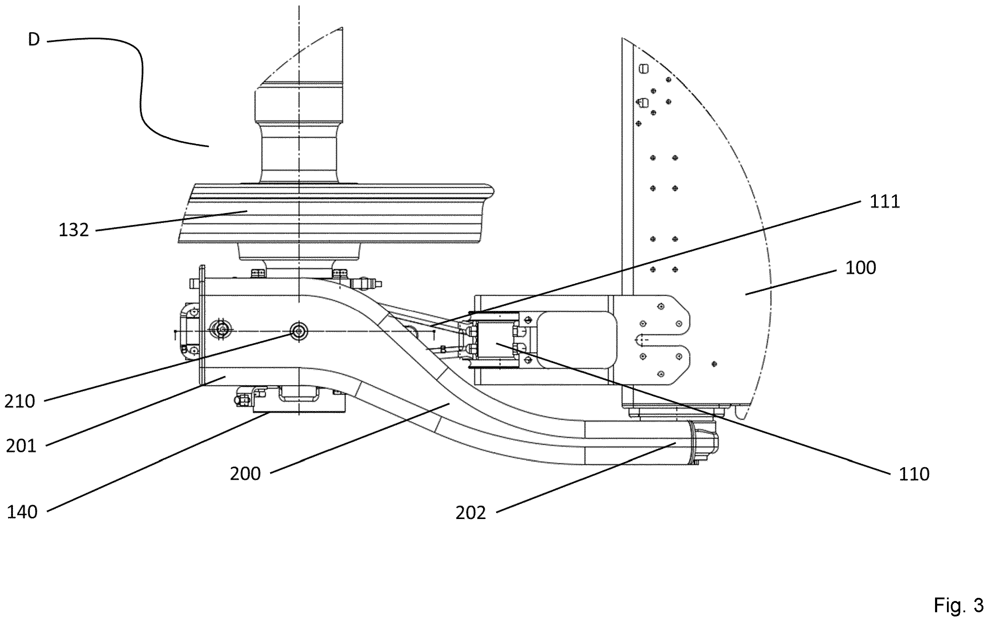

Die Fig. 3 zeigt das Detail D aus Fig. 2. In der Draufsicht dargestellt ist der zweite Endbereich 202 des Federhebels 200, mit dem das Kinematikpaket (verdeckt) über das Befestigungselement 210 verbunden ist. Des Weiteren sind das mit dem Querträger 100 verbundene Achshebelgelenk 110 des Achshebels 111, das Achslager 140 und das Rad 132 des Radsatzes 130 gezeigt.

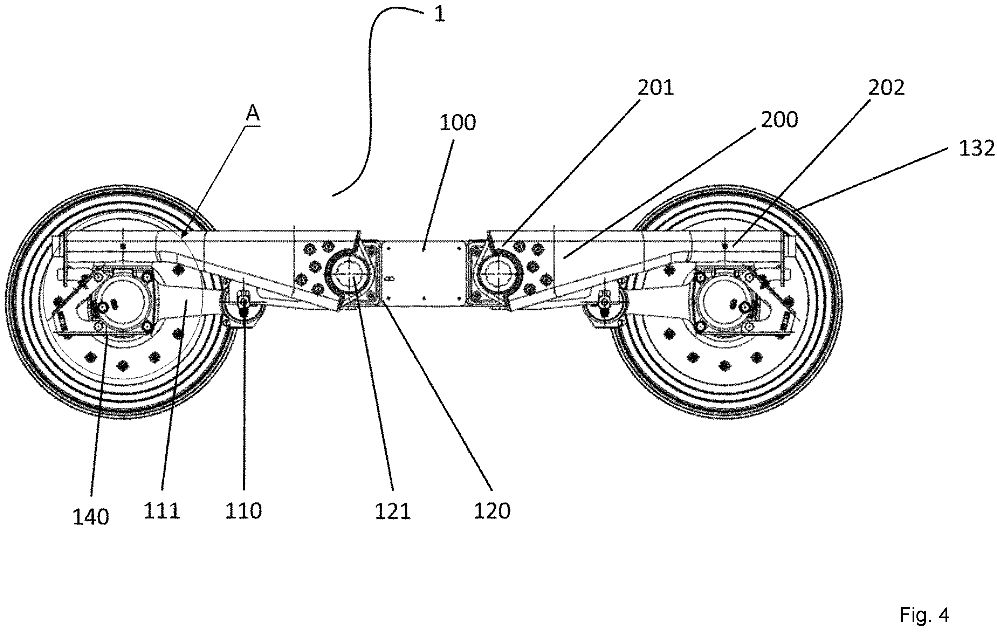

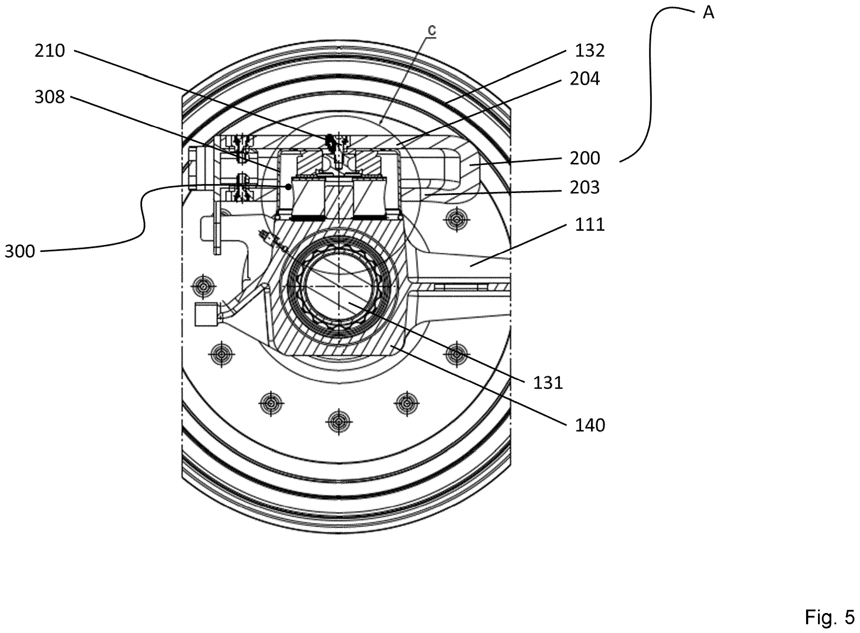

Die Fig. 4 zeigt das erfindungsgemäße Drehgestell 1 aus Fig. 1 in der Seitenansicht. Das im Bereich des linken Achslagers 140 angegebene Detail A ist in Fig. 5 im Querschnitt gezeigt und wird im Folgenden näher erläutert.

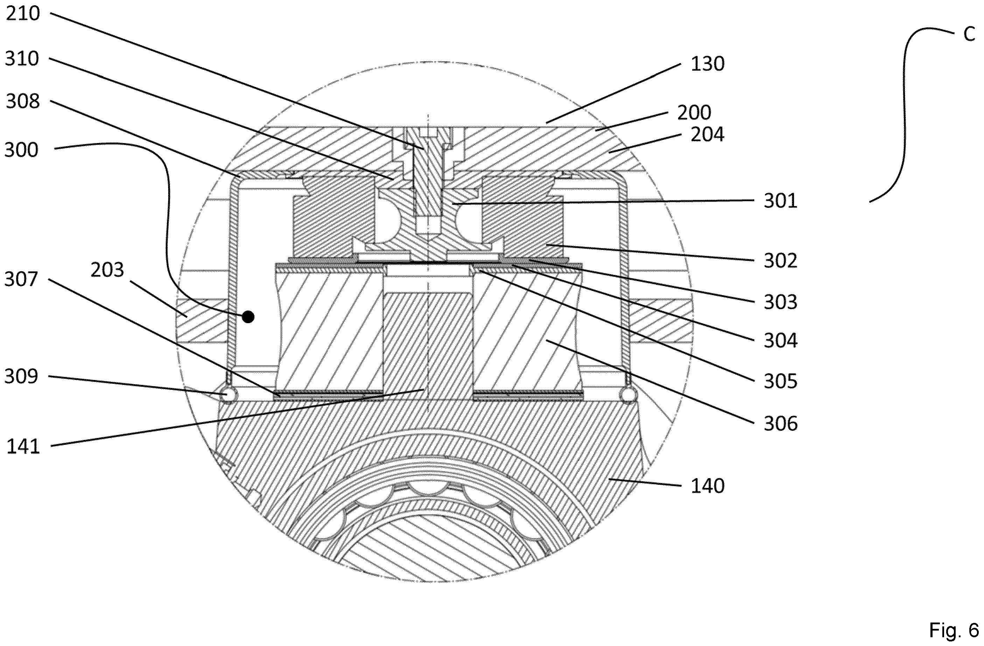

Die Fig. 5 zeigt das in Fig. 4 angegebene Detail A mit einem Querschnitt an der Position des Kinematikpakets 300 und damit einem Querschnitt der erfindungsgemäßen Anordnung aus Federhebel 200 und Kinematikpaket 300. Die Radachse 131 des Rads 132 ist im Achslager 140 gelagert, welches mit dem Achshebel 111 verbunden ist. An der Oberseite des Achslagers 140 wirkt das Kinematikpaket 300 auf das Achslager 140. Durch eine Aussparung in der unteren Wandung 203 ist das Kinematikpaket 300 bereichsweise im inneren Volumen des als FKV-Hohlkammerprofil mit einer Hohlkammer ausgeführten Federhebels 200 angeordnet. Die Einhausung 308 des Kinematikpakets 300 liegt an der oberen Innenseite des Federhebels 200 in Form eines als FKV-Hohlkammerprofil an und ist dort mittels des Befestigungselements 210 mit der oberen Wandung 204 des Federhebels 200 verbunden. Das angegebene Detail C ist in der Fig. 6 gezeigt und wird im Folgenden näher erläutert.

Die Fig. 6 zeigt die Detailansicht C der erfindungsgemäßen Anordnung aus Federhebel 200 und Kinematikpaket 300 aus Fig. 5. Das Kinematikpaket 300 ragt durch eine Aussparung in der unteren Wandung 203 in das innere Volumen des als FKV-Hohlkammerprofil ausgeführten Federhebels 200 hinein. Durch die Einhausung 308 mit Einhausungsdichtung 309 ist das Kinematikpaket 300 gegenüber der Umgebung geschützt, z. B. vor Verschmutzung. Die Einhausung 308 weist eine an der Innenseite der oberen Wandung 204 des Federhebels 200 anliegende, mittels der Befestigung 210, z. B. einer Hülsenkupplung mit Passfeder und Schraube, mit der oberen Wandung lösbar verbundene Abdeckung 310 auf. Die Befestigung 210 ist mit der Abhebesicherung 301 verbunden, die in das Gelenklager 302 eingreift und dieses so in seiner Position sichert. An dem Gelenklager 302 ist eine federhebelseitige Adapterplatte 303 vorgesehen, die zur Anpassung an den Reibbelag 304 dient. Der Reibbelag 304 gleicht Relativbewegungen zwischen Federhebel 200 und Achshebel 111 (nicht dargestellt) aus bzw. ermöglicht diese. An den Reibbelag 304 schließt sich die achshebelseitige Adapterplatte 305 an, welche als Bindeglied zum Gummi-Metall-Element 306 dient, an dem z. B. zum Toleranzausgleich mindestens eine Ausgleichsscheibe 307, welche auf dem Achslager 140 aufliegt, angeordnet ist. Die mindestens eine Ausgleichsscheibe 307 und das Gummi-Metall-Element 306 sitzen formschlüssig auf dem Achslagerzapfen 141 auf, der fest mit dem Achslager 140 verbunden ist, um die Position des Kinematikpakets 300 gegenüber dem Achslager 140 definiert zu halten.

### Bezugszeichen

- 1: Drehgestell
- 100: Querträger
- 110: Achshebelgelenk
- 111: Achshebel
- 120: Torsionsfederaufnahme
- 121: Torsionsfederelement
- 130: Radsatz
- 131: Radachse
- 132: Rad
- 140: Achslager
- 141: Achslagerzapfen
- 200: Federhebel
- 201: Erster Endbereich des Federhebels
- 202: Zweiter Endbereich des Federhebels
- 203: Untere Wandung
- 204: Obere Wandung
- 210: Befestigung des Kinematikpaket
- 300: Kinematikpaket
- 301: Abhebesicherung
- 302: Gelenklager
- 303: Federhebelseitige Adapterplatte
- 304: Reibbelag
- 305: Achshebelseitige Adapterplatte
- 306: Gummi-Metall-Element
- 307: Ausgleichsscheibe
- 308: Einhausung
- 309: Einhausungsdichtung
- 310: Abdeckung der Einhausung
- A: Detail, aus Fig. 4
- C: Detail, in Fig. 5
- D: Detail, aus Fig. 2

## Patentansprüche

1. Anordnung aus einem Kinematikpaket (300) und einem Federhebel (200) für ein Drehgestell (1) aufweisend mindestens zwei Radsätze (130) mit jeweils zwei durch eine Achse (131) verbundenen Rädern (132), wobei ein erster Endbereich (201) des Federhebels (200) mit einer Federkomponente (121) der Primärfederung des Drehgestells (1) verbindbar ist und ein zweiter Endbereich (202) des Federhebels (200) zur Wirkung auf ein Achslager (140) eines der Radsätze (130) des Drehgestells (1) mittels des Kinematikpakets (300) ausgebildet ist, wobei das Kinematikpaket (300) mindestens ein Dämpfungselement (306) aufweist, **dadurch gekennzeichnet, dass** das Kinematikpaket (300) zusätzlich mindestens einen Reibbelag (304) und ein Gelenklager (302) aufweist und bereichsweise im inneren Volumen mindestens einer Hohlkammer des als Hohlkammerprofil ausgebildeten Federhebels (200) angeordnet ist.

2. Anordnung nach Anspruch 1, **dadurch gekennzeichnet, dass** der Federhebel (200) als Hohlkammerprofil aus einem Faser-Kunststoff-Verbundmaterial ausgebildet ist.

3. Anordnung nach Anspruch 1 oder 2, **dadurch gekennzeichnet, dass** der erste Endbereich (201) des Federhebels (200) drehfest mit einem Endbereich eines Torsionsfederelements (121) als Federkomponente der Primärfederung des Drehgestells (1) verbindbar ist.

4. Anordnung nach einem der vorangegangenen Ansprüche, **dadurch gekennzeichnet, dass** das Kinematikpaket (300) lösbar mit dem Federhebel (200) und dem Achslager (140) verbindbar ist.

5. Anordnung nach einem der vorangegangenen Ansprüche, **dadurch gekennzeichnet, dass** das Kinematikpaket (300) eine gegenüber der Umgebung abgedichtete Einhausung (308) aufweist.

6. Anordnung nach einem der vorangegangenen Ansprüche, **dadurch gekennzeichnet, dass** das Kinematikpaket (300) des Weiteren eine zwischen dem Gelenklager (302) und dem Federhebel (200) angeordnete und in das Gelenklager (302) eingreifende Abhebesicherung (301) aufweist.

7. Anordnung nach einem der vorangegangenen Ansprüche, **dadurch gekennzeichnet, dass** das Kinematikpaket (300) mindestens eine Ausgleichsscheibe (307) aufweist, die dem Dämpfungselement (306) des Kinematikpakets (300) zugeordnet ist.

8. Anordnung nach einem der vorangegangenen Ansprüche, **dadurch gekennzeichnet, dass** das Dämpfungselement (306) des Kinematikpakets (300) ein Gummi-Metall-Element ist.

9. Drehgestell (1) für ein Schienenfahrzeug mit mindestens zwei in Achslagern (140) gelagerten Radsätzen (130) und wenigstens einem Querträger (100), wobei jedes der zwei Achslager (140) eines Radsatzes (130) über einen Achshebel (111) mit dem Querträger (100) gelenkig verbunden ist, aufweisend mindestens zwei parallel zu den Radsätzen (130) angeordnete Torsionsfederelemente (121), die jeweils mindestens einen Bereich aufweisen, in dem sie mit dem Querträger (100) drehfest verbunden sind, wobei jedem Achslager (140) eine Anordnung aus einem Kinematikpaket (300) und einem Federhebel (200) nach einem der vorangegangenen Ansprüche zugeordnet ist, wobei mit dem den Querträger (100) überragenden Endbereich des Torsionsfederelements (121) ein erster Endbereich (201) des Federhebels (200) der Anordnung drehfest verbunden ist, und der nicht mit dem Torsionsfederelement (121) verbundene, zweite Endbereich (202) des Federhebels (200) mittels des Kinematikpakets (300) auf das Achslager (140) wirkt.

10. Drehgestell (1) nach Anspruch 9, **dadurch gekennzeichnet, dass** das Achslager (140) mindestens ein Führungselement (141) aufweist, das in das Kinematikpaket (300) eingreift.

## Claims

1. Arrangement comprising a kinematics package (300) and a spring lever (200) for a bogie (1) having at least two wheel sets (130), each with two wheels (132) connected by an axle (131), wherein a first end region (201) of the spring lever (200) can be connected to a spring component (121) of the primary suspension of the bogie (1), and a second end region (202) of the spring lever (200) is configured to act on an axle bearing (140) of one of the wheel sets (130) of the bogie (1) by means of the kinematics package (300), wherein the kinematics package (300) comprises at least one damping element (306), **characterized in that** the kinematics package (300) additionally comprises at least one friction lining (304) and a joint bearing (302) and is arranged in some sections in the internal volume of at least one hollow chamber of the spring lever (200) configured as a hollow chamber profile.

2. Arrangement according to claim 1, **characterized in that** the spring lever (200) is configured as a hollow chamber profile made from a fiber-plastic composite material.

3. Arrangement according to claim 1 or 2, **characterized in that** the first end region (201) of the spring lever (200) can be connected in a rotationally secure manner to an end region of a torsion spring element (121) as a spring component of the primary suspension of the bogie (1).

4. Arrangement according to any one of the preceding claims, **characterized in that** the kinematics package (300) can be detachably connected to the spring lever (200) and the axle bearing (140).

5. Arrangement according to any one of the preceding claims, **characterized in that** the kinematics package (300) has a housing (308) which is sealed off from the environment.

6. Arrangement according to any one of the preceding claims, **characterized in that** the kinematics package (300) further comprises an anti-lift device (301) arranged between the joint bearing (302) and the spring lever (200) and engaging in the joint bearing (302).

7. Arrangement according to any one of the preceding claims, **characterized in that** the kinematics package (300) comprises at least one compensating disc (307) which is associated with the damping element (306) of the kinematics package (300).

8. Arrangement according to any one of the preceding claims, **characterized in that** the damping element (306) of the kinematics package (300) is a rubber-metal element.

9. Bogie (1) for a rail vehicle having at least two wheel sets (130) mounted in axle bearings (140) and at least one cross member (100), wherein each of the two axle bearings (140) of a wheel set (130) is connected in an articulated manner to the cross member (100) via an axle lever (111), comprising at least two torsion spring elements (121) arranged parallel to the wheel sets (130), which each have at least one region in which they are connected to the cross member (100) in a rotationally secure manner, wherein each axle bearing (140) is assigned an arrangement consisting of a kinematics package (300) and a spring lever (200) according to any one of the preceding claims, wherein a first end region (201) of the spring lever (200) of the arrangement is connected in a rotationally secure manner to the end region of the torsion spring element (121) projecting beyond the cross member (100), and the second end region (202) of the spring lever (200) which is not connected to the torsion spring element (121) acts on the axle bearing (140) by means of the kinematics package (300).

10. Bogie (1) according to claim 9, **characterized in that** the axle bearing (140) comprises at least one guide element (141) which engages with the kinematics package (300).

## Revendications

1. Agencement constitué d'un ensemble cinématique (300) et d'un levier à ressort (200) pour un bogie (1) présentant au moins deux jeux de roues (130) avec respectivement deux roues (132) reliées par un essieu (131), dans lequel une première zone d'extrémité (201) du levier à ressort (200) peut être reliée à un composant à ressort (121) de la suspension primaire du bogie (1) et une seconde zone d'extrémité (202) du levier à ressort (200) est conçue pour agir sur un palier d'essieu (140) d'un des jeux de roues (130) du bogie (1) au moyen de l'ensemble cinématique (300), dans lequel l'ensemble cinématique (300) présente au moins un élément d'amortissement (306), **caractérisé en ce que** l'ensemble cinématique (300) présente en outre au moins une garniture de friction (304) et un palier d'articulation (302) et est disposé par zones dans le volume intérieur d'au moins une chambre creuse du levier à ressort (200) conçu en tant que profilé à chambre creuse.

2. Agencement selon la revendication 1, **caractérisé en ce que** le levier à ressort (200) est conçu en tant que profilé à chambre creuse en un matériau composite de fibres et matière plastique.

3. Agencement selon la revendication 1 ou 2, **caractérisé en ce que** la première zone d'extrémité (201) du levier à ressort (200) peut être reliée de manière immobile en rotation à une zone d'extrémité d'un élément de ressort de torsion (121) en tant que composant à ressort de la suspension primaire du bogie (1).

4. Agencement selon l'une quelconque des revendications précédentes, **caractérisé en ce que** l'ensemble cinématique (300) peut être relié de manière amovible au levier à ressort (200) et au palier d'essieu (140).

5. Agencement selon l'une quelconque des revendications précédentes, **caractérisé en ce que** l'ensemble cinématique (300) présente une enceinte (308) étanche par rapport à l'environnement.

6. Agencement selon l'une quelconque des revendications précédentes, **caractérisé en ce que** l'ensemble cinématique (300) présente en outre un dispositif anti-soulèvement (301) disposé entre le palier d'articulation (302) et le levier à ressort (200) et s'engageant dans le palier d'articulation (302).

7. Agencement selon l'une quelconque des revendications précédentes, **caractérisé en ce que** l'ensemble cinématique (300) présente au moins une rondelle de compensation (307) qui est associée à l'élément d'amortissement (306) de l'ensemble cinématique (300).

8. Agencement selon l'une quelconque des revendications précédentes, **caractérisé en ce que** l'élément d'amortissement (306) de l'ensemble cinématique (300) est un élément en caoutchouc-métal.

9. Bogie (1) pour un véhicule ferroviaire avec au moins deux jeux de roues (130) montés dans des paliers d'essieu (140) et au moins une traverse (100), dans lequel chacun des deux paliers d'essieu (140) d'un jeu de roues (130) est relié de manière articulée à la traverse (100) par l'intermédiaire d'un levier d'essieu (111), présentant au moins deux éléments de ressort de torsion (121) disposés parallèlement aux jeux de roue (130), éléments qui présentent respectivement au moins une zone dans laquelle ils sont reliés à la traverse (100) de manière immobile en rotation, dans lequel un agencement constitué d'un ensemble cinématique (300) et d'un levier à ressort (200) est associé à chaque palier d'essieu (140) selon l'une quelconque des revendications précédentes, dans lequel une première zone d'extrémité (201) du levier à ressort (200) de l'agencement est reliée de manière immobile en rotation à la zone d'extrémité de l'élément à ressort de torsion (121) faisant saillie de la traverse (100), et la seconde zone d'extrémité (202) du levier à ressort (200) non reliée à l'élément à ressort de torsion (121) agit sur le palier d'essieu (140) au moyen de l'ensemble cinématique (300).

10. Bogie (1) selon la revendication 9, **caractérisé en ce que** le palier d'essieu (140) présente au moins un élément de guidage (141) qui s'engage dans l'ensemble cinématique (300).
